# EUROPEAN PATENT SPECIFICATION

(11) **EP 3 103 846 B1**
(45) Date of publication and mention of the grant of the patent: **31.01.2018**
(21) Application number: 15171511.7
(22) Date of filing: 10.06.2015
(51) Int. Cl.: C08G 18/42, C08G 18/44, C08G 18/66, C08G 18/76, C08G 18/32

(54) **SELF-HEALING POLYURETHANE POLYMERS**
SELBSTHEILENDE POLYURETHANPOLYMERE
POLYMÈRES DE POLYURÉTHANE AUTOCICATRISANTS

(43) Date of publication of application: 14.12.2016
(73) Proprietor: UBE Corporation Europe, S.A.U., 12100-Castellón (ES)
(72) Inventor: Colera Llavata, Manuel, 12100 Castellón (ES); Costa Vayá, Victor Ignacio, 12100 Castellón (ES); Jofre Reche, José Antonio, 03560 El Campello (Alicante) (ES); Martín Martínez, José Miguel, 03560 El Campello (Alicante) (ES)
(74) Representative: Ungria López, Javier

(56) References cited:
- EP-A1- 0 781 792
- WO-A1-2009/048996
- WO-A1-2014/019843
- WO-A1-2015/033183
- US-B1- 8 846 801
- "Rubber, vulcanized or thermoplastic - Determination of tensile stress-strain properties", IS,, 15 December 2011 (2011-12-15), page 31pp, XP009191042,
- WU D Y ET AL: "Self-healing polymeric materials: A review of recent developments", PROGRESS IN POLYMER SCIENCE, PERGAMON PRESS, OXFORD, GB, vol. 33, no. 5, 1 May 2008 (2008-05-01), pages 479-522, XP022648873, ISSN: 0079-6700, DOI: 10.1016/J.PROGPOLYMSCI.2008.02.001 [retrieved on 2008-03-04]

## Description

### Field of the invention

The present invention relates to the use of polyurethanes as self-healing polymers. More specifically, this invention relates to polyurethanes prepared with a polycarbonate diol exhibiting spontaneous self-healing behavior at room temperature without applying pressure, both in air and immersed in fluids.

### Background of the invention

Self-healing materials have a great interest in a wide variety of applications where once microcracks or cuts are produced they can be self-repaired with time without additional application of heating or pressure. An ideal self-healing material should recover its initial properties after repairing itself. Several mechanisms of self-healing have been proposed and developed for materials and more particularly for polymers, depending on the nature and structure of the material, with different level of success. Some of these methods include the microencapsulation of the healing agent into the polymer formulation or structure, the molecular interdiffusion, the existence of reversible bonds, crosslinking and the creation of supramolecular interpenetrating networks.

One of the most common methods to obtain self-healing materials, mostly for thermoset polymers, is the microencapsulation, which is based on the insertion of small capsules containing a self-healing agent and catalyst separately within the polymer bulk. When a fissure is produced along the material, the microcapsules break and empty their contents, filling the gap and curing, and preventing further crack growth. Some different self-healing agents have been used including dicyclopentadiene within epoxy resins or even the epoxy resin with a diamine.

US 2013/0196071 discloses polyurethanes comprising microcapsules containing liquid isocyanate and polyol as healing agents. The microencapsulation healing method shows some limitations in that the damaged area can only be repaired once. Furthermore, the mechanical properties are modified and the healed region is more rigid after healing.

Other solutions that have been proposed in the state of the art are the following ones:
WO 2014/019843 describes an optical article which inter alia comprises a self-healing outer coating obtained by drying and curing a composition comprising at least one polycarbonate polyol, at least one polyisocyanate, at least one solvent and at least one surfactant. The purpose of the invention is developing an optical article with an improved scratch and abrasion resistance.
WO 2015/033183 describes a method of obtaining a composition capable of being cured into a coating that is transparent to visible light, wherein the method comprises mixing a self-healing coating solution with a dispersion of colloidal nanoparticles and at least one solvent or a surfactant.
Finally, US 8846801 refers to a self-healing polyurethane rubber comprising a thermoplastic polyurethane synthesized from 3-methy-1,5-pentanediol, poly(hexamethylene carbonate)diol, a chain extender and an isocyanate in the presence of a catalyst. In addition, it requires the presence of carbon nanotubes dispersed within the polyurethane to enhance the self-healing performance. However, there is still a need in the art for improved polyurethanes having self-healing properties. More particularly, there is a need for polyurethanes that are self-healing at room temperature without adding healing agents. There is furthermore a need for polyurethanes having self-healing properties, where the damaged area recovers its mechanical properties and where the damaged area can be repaired more than once. There is furthermore a need for polyurethanes having self-healing properties when they are submerged in a fluid.

### Summary of the invention

The present invention concerns in a first aspect the use of a polyurethane, obtainable by reacting a mixture comprising a polycarbonate diol, a polyester diol, an isocyanate, and optionally a chain extender, as a self-healing polymer, as disclosed in claim 1. In a second aspect, the present invention concerns a method of healing a cut, tear, or other damage to a polyurethane, obtainable by reacting a mixture comprising a polycarbonate diol, a polyester diol, an isocyanate, and optionally a chain extender, by arranging the cut, torn, or damaged parts of the polyurethane to be in physical contact with each other, as disclosed in claim 8.

In a third aspect, the present invention concerns a partly or completely submerged structure comprising said polyurethane obtainable by reacting a mixture comprising a polycarbonate diol, a polyester diol, an isocyanate, and optionally a chain extender, wherein the polyurethane is located in the submerged part of the submerged structure.

### Brief description of the figures

Figure 1 contains photos of the polyurethane prepared in Example 1 after cut and re-joining, before and after a stress-strain test.
Figure 2 shows the stress-strain curves of the uncut and cut polyurethane prepared in Example 1.
Figure 3 contains photos of the polyurethane prepared in Example 2 after cut and re-joining, before and after a stress-strain test.
Figure 4 shows the stress-strain curves of the uncut and cut polyurethane prepared in Example 2.
Figure 5 shows the stress-strain curves of the uncut and cut polyurethane prepared in Example 4.
Figure 6 contains photos of the polyurethane prepared in Comparative Example 5 after cut and re-joining, before and after a stress-strain test.
Figure 7 shows the stress-strain curves of the uncut and cut polyurethane prepared in Comparative Example 5.
Figure 8 contains photos of the polyurethane prepared in Comparative Example 6 after cut and re-joining, before and after a stress-strain test.
Figure 9 shows the stress-strain curves of the uncut and cut polyurethane elastomer prepared in Comparative Example 6.

### Detailed description of the invention

The present invention concerns in a first aspect the use of a polyurethane, obtainable by reacting a mixture comprising a polycarbonate diol, a polyester diol, an isocyanate, and optionally a chain extender, as a self-healing polymer.

In a second aspect, the present invention concerns a method of healing a cut, tear, or other damage to a polyurethane, obtainable by reacting a mixture comprising a polycarbonate diol, a polyester diol, an isocyanate, and optionally a chain extender, by arranging the cut, torn, or damaged parts of the polyurethane to be in physical contact with each other.

It has been found that the polyurethane according to the present invention also displays self-healing character submerged in water. Hence, in a third aspect, the present invention concerns partly or completely submerged structure comprising a polyurethane obtainable by reacting a mixture comprising a polycarbonate diol, a polyester diol, an isocyanate, and optionally a chain extender, wherein the polyurethane is located in the submerged part of the submerged structure.

### Definitions

In the context of the present invention, the term "self-healing polymer" refers to a polymer that, after having been cut, torn, or damaged, substantially returns to its original mechanical properties with little or no external influences. Thus, a "self-healing polymer" does not need any significant heating, external pressure, sequestered healing agents, or other external forces in order to substantially return to its original mechanical properties. In one embodiment, the term "self-healing polymer" refers to a polymer, wherein the tensile strength of the polymer material after being cut in half at the middle and the two halves being arranged to be in physical contact within five minutes of cutting for 24 hours at a temperature of 25 °C without a sequestered healing agent is at least 45% of the tensile strength of an identical polymer material not having been cut in half. The polymer material is cut and measured according to the ISO 37 standard by using type 2 dumbbell specimens.

In the context of the present invention, the term "partly or completely submerged structure" refers to a structure partly or entirely submerged in a body of an aqueous medium, such as water. Said body of water may be a body of fresh water, buffered aqueous solution, or sea water.

In the context of the present invention, the term "sequestered healing agent" refers to an external healing agent foreign to the material being healed, and which is released upon damage to the material. Thus, a "self-healing polymer without a sequestered healing agent" refers to a polymer that is self-healing without adding an external healing agent in capsules, capillary channels or the like.

Chain extenders are known to the person skilled in the art of preparing polyurethane. Thus, in the context of the present invention, the term "chain extenders" is used in the usual meaning in the art. Examples of chain extenders for polyurethanes known in the art include ethylene glycol, diethylene glycol, triethylene glycol, tetraethylene glycol, propylene glycol, dipropylene glycol, tripropylene glycol, 1,3-propanediol, 1,3-butanediol, 1,4-butanediol, neopentyl glycol, 1,6-hexanediol, 1,4-cyclohexanedimethanol, ethanolamine, diethanolamine, methyldiethanolamine, phenyldiethanolamine, glycerol, trimethylolpropane, 1,2,6-hexanetriol, triethanolamine, pentaerythritol, N,N,N',N' -tetrakis-(2-hydroxypropyl)-ethylenediamine, diethyltoluenediamine, and dimethylthiotoluenediamine, ethylenediamine, 1,2-propanediamine, 1,6- hexamethylenediamine, piperazine, 2-methylpiperazine, 2,5-dimethylpiperazine, isophoronediamine, 4,4'-dicyclohexylmethanediamine, 3,3'-dimethyl-4,4'-dicyclohexylmethanediamine, 1,2-cyclohexanediamine, 1,4-cyclohexanediamine, aminoethylethanolamine, aminopropylethanolamine, aminohexylethanolamine, aminoethylpropanolamine, aminopropylpropanolamine, and aminohexylpropanolamine.

### Preparing polyurethanes

### Polycarbonate diols

Preparing polyurethanes from polycarbonate diols is well known in the art. This is *inter alia* disclosed in US 3,639,354 and US 4,105,641. Furthermore, polycarbonate diols are sold commercially with the aim of being used in the preparation of *inter alia* polyurethanes.

Polycarbonate diols in accordance with the present invention are polyols containing carbonate groups and straight or branched acyclic or cyclic alkylene groups having from 2 to 20 carbon atoms. The polycarbonate diols may also comprise aromatic groups. In one embodiment, the polycarbonate diols are polyols comprising carbonate groups and straight or branched acyclic or cyclic alkylene groups having from 2 to 20 carbon atoms. In another embodiment, the polycarbonate diols are polyols comprising carbonate groups and aromatic groups having form 6 to 20 carbon atoms. In yet another embodiment, the polycarbonate diols are polyols comprising carbonate groups and both straight or branched acyclic or cyclic alkylene groups having from 2 to 20 carbon atoms and aromatic groups having form 6 to 20 carbon atoms (i.e. copolymers).

Suppliers of polycarbonate diols include Ube Industries Ltd., Perstorp, Bayer MaterialScience, and ICC Chemical Corporation. Commercially available products include:
Eternacoll UM90; Eternacoll UH 50; Eternacoll UH 100; Eternacoll UH 200; Eternacoll UH 300; Eternacoll PH 50; Eternacoll PH 80D; Eternacoll PH 100; Eternacoll PH 200D; Eternacoll PH 300D; Eternacoll BH 100; Eternacoll BH 200; Eternacoll UPH 100; Eternacoll UPH 200; Eternacoll UHC 50-50; Eternacoll UHC 50-100; Eternacoll UHC 50-200; Eternacoll PHC 50-50; Eternacoll PHC 50-100; Eternacoll PHC 50-200; Eternacoll UT 200; Oxymer C112; Oxymer M112; Oxymer HD56; Desmophen C2100; Desmophen C2200; Desmophen C XP 2613; Desmophen C 3100 XP; Desmophen C 3200 XP; Desmophen C XP 2716; Desmophen C1100; Desmophen C1200; Ravecarb 102; Ravecarb 103; Ravecarb 106; Ravecarb 107; Ravecarb 101; Ravecarb 108; Ravecarb 109; Ravecarb 111; Ravecarb 291; Ravecarb 292; Ravecarb 293; Ravecarb 294; Ravecarb 295; Nippollan 963; Nippollan 964; Nippollan 980R; Nippollan 981; Nippollan 982R; Sovermol 920; PLACCEL 220EC; and CAPA 2203A.

### Polyester diols

Preparing polyurethanes from polyester diols is also well known in the art. This is *inter alia* disclosed in GB 1097504 and US 3,542,709. Furthermore, polyester diols are sold commercially with the aim of being used in the preparation of *inter alia* polyurethanes.

Suppliers of polyester diols include Synthesia International, Croda Coatings & Polymers, and Bayer MaterialScience. Any polyester diol known in the art to be useful for preparing polyurethane may be applied in the present invention. Some commercially available products include:
HOOPOL F523; HOOPOL F-501; HOOPOL F-110-1000; HOOPOL F-113; HOOPOL F-116; HOOPOL F-123; HOOPOL F-330; HOOPOL F-412; HOOPOL F-523; HOOPOL F-690; HOOPOL F-9480; HOOPOL F-9900; HOOPOL F-9920; HOOPOL F-9690; HOOPOL F-881; HOOPOL F-5321; HOOPOL F-10670; HOOPOL F-10201; HOOPOL F-20013; HOOPOL S-101-55-1; HOOPOL S-101-135; HOOPOL S-1015-35; HOOPOL S-1015-120; HOOPOL S-1015-210; HOOPOL S-1017-70; HOOPOL S-1042-55; HOOPOL S-1063-35; HOOPOL S-1100-100; HOOPOL S-1155-55; HOOPOL F-900; HOOPOL F-580; HOOPOL F-531; HOOPOL F-970; HOOPOL F-972; HOOPOL F-931; HOOPOL F-902; HOOPOL F-911; HOOPOL F-930; HOOPOL F-3000; HOOPOL F-7931; HOOPOL F-88933; HOOPOL F-88931; Pripol 2033; Priplast 1838; Priplast 3196; Desmophen 1700; Desmophen 1652; Desmophen 850; Baycoll AD 2055; Baycoll AD 2047; Nippollan 1100; Nippollan 125P; Nippollan 131; Nippollan 141; Nippollan 179P; Nippollan 800; Nippollan 121E; Nippollan 1004; Nippollan 136; Nippollan 152; Nippollan 163; Nippollan 164; Nippollan 3027; Nippollan 4002; Nippollan 4009; Nippollan 4010; Nippollan 4040; Nippollan 4042; Nippollan 4073; Nippollan 5018; Nippollan 5035; YA-7210; YA-7220; YA-7410; YA-7120; YA7130M; YA-7140; YA-7155; YA-7710; YA-7720; YA-2520; YA-7610; Isoexter 3392; Isoexter 3714; Isoexter 3266; Isoexter 34787; CA-4010; CA-4020; CA-4030; CA-4010U; CA-4020U; CA-4030U; CA-4040U; CA-2410; CA-2420; CA-2430; CA-2410U; CA-2420U; CA-2430U; CA-2510; CA-2520;CA-2530; CA-2010; CA-2020; CA-2030; CA-5010U; CA-5020U; CA-6010U; CA-6020U; CA-6030U; CA-6410; CA-6420; CA-6430; PO-5010; PO-7115; PO-7120; PO-7020; PO-6010; PO-6020; PO-6030; PO-6120; Fomrez 8066-72; Fomrez F15-175; Fomrez C24-53U; Fomrez 8012-56; Fomrez I24-112; Fomrez C23-33U; Fomrez F46-56; Fomrez 8166-74; Fomrez 66-20; Fomrez 11-56; Fomrez 66-112; Fomrez 66-28; Fomrez 66-56; Fomrez 66-32; Fomrez 11-112; Fomrez 11-45;PLACCEL 220EB; PLACCEL 220NP1; PLACCEL L205AL; PLACCEL L220AL; PLACCEL L320AL; DYNACOLL 7110; DYNACOLL 7111; DYNACOLL 7130; DYNACOLL 7131; DYNACOLL 7140; DYNACOLL 7150; DYNACOLL 7210; DYNACOLL 7230; DYNACOLL 7231; DYNACOLL 7250; DYNACOLL 7255; DYNACOLL 7320; DYNACOLL 7321; DYNACOLL 7330; DYNACOLL 7331; DYNACOLL 7340; DYNACOLL 7360; DYNACOLL 7361; DYNACOLL 7362; DYNACOLL 7363; DYNACOLL 7365; DYNACOLL 7366; DYNACOLL 7380; DYNACOLL 7381; DYNACOLL 7390; BEXTER 15; BEXTER 20; BEXTER 22 H; BEXTER 31; BEXTER 41; BEXTER 70 E; BEXTER 71 E; BEXTER 80 E; BEXTER 82 E; BEXTER 110 K; BEXTER 120 K; BEXTER 21 B; BEXTER 225 T; EXPOL PH 270; EXPOL PH 300; EXPOL PH 332; EXPOL PH 350; EXPOL PH 400; EXPOL PH 240; EXPOL PH 1752; NY - 110E; NY - 120E; NY - 120D; NY - 106B; NY - 110B; NY - 120B; NY - 130B; NY -140B; NY - 220; NY - 222; NY - 313; NY - 320; NY - 332; NY - 410; NY - 415; NY - 425; NY - 418; TEROL 11; TEROL 198; TEROL 250; TEROL 563; TEROL 595; TEROL 1304; TEROL 1364; POLIMAXX A 8411; POLIMAXX A8411; Kurakay Polyol P-510; Kurakay Polyol P-1010; Kurakay Polyol P-2010; Kurakay Polyol P-3010; Kurakay Polyol P-4010; Kurakay Polyol P-5010; Kurakay Polyol P-6010; Kurakay Polyol F-2010; Kurakay Polyol P-2011; Kurakay Polyol P-520; Kurakay Polyol P-2013; Kurakay Polyol P-2020; Kurakay Polyol P-1012; Kurakay Polyol P-530; Kurakay Polyol P-2012; Kurakay Polyol N-2010; Kurakay Polyol P-2030; Kurakay Polyol P-2050; MELPOLY R400-2; MELPOLY V200-2; MELPOLY V460-3; CAPA 2043; CAPA 2047A; CAPA 2054; CAPA 2100A; CAPA 2101A; CAPA 2125; CAPA 2141A; CAPA 2161A; CAPA 2201A; CAPA 2205; CAPA 7201A; CAPA 8025D; POLIOS 55/20 A; POLIOS 55/20 N; POLIOS 55/20 N 01; POLIOS 55/20; POLIOS 60/20 A; POLIOS 50/20; POLIOS 40/21; POLIOS 60/20; STEPANPOL 2000; STEPANPOL 2001 KS; STEPANPOL PC 1011-55; STEPANPOL PC 1015-55; STEPANPOL PC 1017P-55; STEPANPOL PC 101P-55; STEPANPOL PC 102-56; STEPANPOL PC 1035-55; STEPANPOL PC 1040-55; STEPANPOL PC 1040P-55; STEPANPOL PC 107P-55; STEPANPOL PC 5070P-56; STEPANPOL PD 56; STEPANPOL PH 56; STEPANPOL PHN 56; CASPOL 5001; CASPOL 5003; and CASPOL 5007.

Polyurethanes prepared using a mixture of polycarbonate diol and polyester diol may be prepared according to the methods for preparing polyurethanes based on polycarbonate diols or polyester diols.

The polyurethane comprises both a polycarbonate diol and polyester diol. In a further embodiment, the polycarbonate diol and the polyester diol are present in a molar ratio of 99.5:0.5 to 0.5:99.5, e.g. 95:5 to 5:95, 90:10 to 10:90, 80:20 to 20:80, 70:30 to 30:70, 60:40 to 40:60, 55:45 to 45:55, or 50:50.

The polycarbonate diol and the polyester diol may either be part of the same co-polymer or may be present as a physical mixture when preparing the polyurethane. Hence, in another embodiment, the polycarbonate diol and the polyester diol are present in the same co-polymer or as a physical mixture.

### Isocyanate

The skilled person is familiar with the various types of isocyanates useful for preparing polyurethanes. Examples of such isocyanates are disclosed *inter alia* in US 3,639,354, US 4,105,641, GB 1097504 and US 3,542,709. Accordingly, any isocyanate known in the art to be useful for preparing polyurethane may be applied in the present invention.

Examples of suitable isocyanates include:
Suprasec® 5025 (Huntsman); Suprasec® 2085 (Huntsman); Suprasec® 2211 (Huntsman); Suprasec® 2050 (Huntsman); Suprasec® 2487 (Huntsman); Suprasec® 2495 (Huntsman); Suprasec® 2496 (Huntsman); Suprasec® 2030 (Huntsman); Suprasec® 2651 (Huntsman); Suprasec® 2330 (Huntsman); Suprasec® 2015 (Huntsman); Suprasec® 2214 (Huntsman); Suprasec® 2647 (Huntsman); Suprasec® 1000 (Huntsman); Suprasec® 1100 (Huntsman); Suprasec® 1306 (Huntsman); Suprasec® 1400 (Huntsman); Suprasec® 2004 (Huntsman); Suprasec® 2385 (Huntsman); Suprasec® 2386 (Huntsman); Suprasec® 4102 (Huntsman); Suprasec® 2020 (Huntsman); Suprasec® 2388 (Huntsman); Suprasec® 1042 (Huntsman); Suprasec® 9584 (Huntsman); Suprasec® 2060 (Huntsman); Suprasec® 2234 (Huntsman); Suprasec® 2237 (Huntsman); Suprasec® 2416 (Huntsman); Suprasec® 1007 (Huntsman); Suprasec® 2006 (Huntsman); Suprasec® 2144 (Huntsman); Suprasec® 2244 (Huntsman); Suprasec® 2445 (Huntsman); Suprasec® 2982 (Huntsman); Suprasec® 2783 (Huntsman); Suprasec® 2944 (Huntsman); Suprasec® 2980 (Huntsman); Suprasec® 2444 (Huntsman); Suprasec® 2733 (Huntsman); Suprasec® 2021 (Huntsman); Suprasec® 2029 (Huntsman); Suprasec® 2018 (Huntsman); Suprasec® 2010 (Huntsman); Suprasec® 2054 (Huntsman); Suprasec® 2067 (Huntsman); Rubinate® M (Huntsman); Rubinate® 1245 (Huntsman); Rubinate® 1820 (Huntsman); Rubinate® 9257 (Huntsman); Rubinate® 44 (Huntsman); Rubinate® 1680 (Huntsman); Rubinate® 9447 (Huntsman); Rubinate® 9480 (Huntsman); Rubinate® 9495 (Huntsman); Rubinate® 9009 (Huntsman); Rubinate® 9236 (Huntsman); Rubinate® 9040 (Huntsman); Rubinate® 9272 (Huntsman); Rubinate® 9511 (Huntsman); Rubinate® 9234 (Huntsman); Rubinate® 9271 (Huntsman); Rubinate® 1790 (Huntsman); Rubinate® 1670 (Huntsman); Rubinate® 1209 (Huntsman); Rubinate® 9465 (Huntsman); Rubinate® 1920 (Huntsman); Rubinate® 1234 (Huntsman); Desmodur N 3800 (Bayer Material Science); NP 1200 (Mitsui Chemical Polyurethanes Inc.); XP2500 (Bayer Material Science); Desmodur XP 2580 (Bayer Material Science); Basonat HA 100 (BASF); Basonat HA 200 (BASF); Basonat HA 300 (BASF); D 178 N (Mitsui Chemical Polyurethanes Inc.); Desmodur N 3400 (Bayer Material Science); Desmodur XP 2730 (Bayer Material Science); Desmodur BL 1100/1 (Bayer Material Science); Desmodur BL 3175A (Bayer Material Science); Desmodur BL 3370 MPA (Bayer Material Science); Desmodur BL 3475 BA7SN (Bayer Material Science); Desmodur BL 4265 SN(Bayer Material Science); Desmodur BL 5375 (Bayer Material Science); Desmodur DA-L (Bayer Material Science); Desmodur DN (Bayer Material Science); Desmodur E-14 (Bayer Material Science); Desmodur E-15 (Bayer Material Science); Desmodur E-22 (Bayer Material Science); Desmodur E 23 A (Bayer Material Science); Desmodur E 28 (Bayer Material Science); Desmodur E 210 (Bayer Material Science); Desmodur E 305 (Bayer Material Science); Desmodur E 743 (Bayer Material Science); Desmodur E 744 (Bayer Material Science); Desmodur E 1160 MPA/X (Bayer Material Science); Desmodur E 1361 MPA/X (Bayer Material Science); Desmodur BL 1100/1 (Bayer Material Science); Desmodur HL BA (Bayer Material Science); Desmodur I (Bayer Material Science); Desmodur IL BA (Bayer Material Science); Desmodur E 1750 PR (Bayer Material Science); Desmodur E 3265 MPA7SN (Bayer Material Science); Desmodur H (Bayer Material Science); Desmodur IL 1351 (Bayer Material Science); Desmodur IL 1451 (Bayer Material Science); Desmodur IL EA (Bayer Material Science); Desmodur IL IN EA (Bayer Material Science); Desmodur L 67 BA (Bayer Material Science); Desmodur L 67 MPA/X (Bayer Material Science); Desmodur L 75 (Bayer Material Science); Desmodur N 75A BA (Bayer Material Science); Desmodur N 75A BA/X (Bayer Material Science); Desmodur N 100A (Bayer Material Science); Desmodur N 3200 (Bayer Material Science); Desmodur N 3300A (Bayer Material Science); Desmodur N 3390A BA/SN (Bayer Material Science); Desmodur N 3600 (Bayer Material Science); Desmodur N 3790 BA (Bayer Material Science); Desmodur N 3900 (Bayer Material Science); Desmodur PL 340 BA/SN (Bayer Material Science); Desmodur PL 350 MPA/SN (Bayer Material Science); Desmodur TS 35 (Bayer Material Science); Desmodur TS 50 (Bayer Material Science); Desmodur VL (Bayer Material Science); Desmodur VP LS 2078/2 (Bayer Material Science); Desmodur VP LS 2371 (Bayer Material Science); Desmodur VP LS 2397 (Bayer Material Science); Desmodur VP.PU ME 28TF04 (Bayer Material Science); Desmodur VP.PU MS 30TF01 (Bayer Material Science); Desmodur W (Bayer Material Science); Desmodur XP 2565 (Bayer Material Science); Desmodur XP 2489 (Bayer Material Science); Desmodur XP 2565 (Bayer Material Science); Desmodur XP 2599 (Bayer Material Science); Desmodur XP 2617 (Bayer Material Science); Desmodur XP 2675 (Bayer Material Science); Desmodur XP 2763 (Bayer Material Science); Desmodur XP 2795 (Bayer Material Science); Desmodur XP 2838 (Bayer Material Science); Desmodur XP 2840 (Bayer Material Science); Desmodur Z 4470 BA (Bayer Material Science); Desmodur Z 4470 MPA/X (Bayer Material Science); Desmodur Z 4470 SN (Bayer Material Science); Desmodur Z 4470 SN/BA (Bayer Material Science); Desmodur IL 1351 51% BA (Bayer Material Science); Desmodur IL 1351 51% EA (Bayer Material Science); Desmodur LD (Bayer Material Science); Desmodur LP BUEJ 471 (Bayer Material Science); Mondur 445 (Bayer Material Science); Mondur 448 (Bayer Material Science); Mondur 489 (Bayer Material Science); Mondur 501 (Bayer Material Science); Mondur 541-Light (Bayer Material Science); Mondur 582 (Bayer Material Science); Mondur 841 (Bayer Material Science); Mondur 1437 (Bayer Material Science); Mondur 1488 (Bayer Material Science); Mondur 1453 (Bayer Material Science); Mondur 1515 (Bayer Material Science); Mondur 1522 (Bayer Material Science); Mondur 3695 (Bayer Material Science); Mondur CD (Bayer Material Science); Mondur MA-2300 (Bayer Material Science); Mondur MA-2603 (Bayer Material Science); Mondur MA-2902 (Bayer Material Science); Mondur MA-2903 (Bayer Material Science); Mondur MA-2904 (Bayer Material Science); Mondur MB (Bayer Material Science); Mondur MLQ (Bayer Material Science); Mondur MQ (Bayer Material Science); Mondur MR (Bayer Material Science); Mondur MR LIGHT (Bayer Material Science); Mondur MR-5 (Bayer Material Science); Mondur MRS (Bayer Material Science); Mondur MRS-2 (Bayer Material Science); Mondur MRS-4 (Bayer Material Science); Mondur PC (Bayer Material Science); Mondur PF (Bayer Material Science); Mondur TD-65 (Bayer Material Science); Mondur TD-80 GRADE A (Bayer Material Science); Mondur TD-80 GRADE A/GRADE B (Bayer Material Science); Mondur TDS (Bayer Material Science); Lupranat M10R (BASF); Lupranat M20FB (BASF); Lupranat M20S (BASF); Lupranat M50 (BASF); Lupranat M70R (BASF); Lupranat ME (BASF); Lupranat MI (BASF); Lupranat MM103 (BASF); Lupranat MP102 (BASF); Lupranat MP105 (BASF); Lupranat MR (BASF); Lupranat T80A (BASF); Isonate 50 O (Dow Chemical); Isonate 125 M (Dow Chemical); Isonate 143 L (Dow Chemical); Isonate 181 (Dow Chemical); Isonate 240 (Dow Chemical); PAPI 20 (Dow Chemical); PAPI 27 (Dow Chemical); PAPI 94 (Dow Chemical); PAPI 95 (Dow Chemical); PAPI 580N (Dow Chemical); and PAPI 901 (Dow Chemical).

### Chain extenders

The skilled person is familiar with the various types of chain extenders useful for preparing polyurethanes. Examples of useful chain extenders in the present invention include:
ethylene glycol, diethylene glycol, triethylene glycol, tetraethylene glycol, propylene glycol, dipropylene glycol, tripropylene glycol, 1,3-propanediol, 1,3- butanediol, 1,4-butanediol, neopentyl glycol, 1,6-hexanediol, 1,4- cyclohexanedimethanol, ethanolamine, diethanolamine, methyldiethanolamine, phenyldiethanolamine, glycerol, trimethylolpropane, 1,2,6-hexanetriol, triethanolamine, pentaerythritol, N,N,N',N'-tetrakis-(2-hydroxypropyl)- ethylenediamine, diethyltoluenediamine, and dimethylthiotoluenediamine, ethylenediamine, 1,2-propanediamine,1,6-hexamethylenediamine, piperazine,2-methylpiperazine, 2,5-dimethylpiperazine, isophoronediamine, 4,4'-dicyclohexylmethanediamine, 3,3'-dimethyl-4,4'-dicyclohexylmethanediamine, 1,2-cyclohexanediamine, 1,4-cyclohexanediamine, aminoethylethanolamine, aminopropylethanolamine, aminohexylethanolamine, aminoethylpropanolamine, aminopropylpropanolamine, and aminohexylpropanolamine.

In a presently preferred embodiment, the chain extender is selected from the group consisting of 1,4-butanediol, ethylene glycol, diethylene glycol, triethylene glycol, tetraethylene glycol, propylene glycol, dipropylene glycol, tripropylene glycol, 1,3-propanediol, 1,3-butanediol, 1,4-butanediol, neopentyl glycol, 1,6-hexanediol, 1,4-cyclohexanedimethanol, ethanolamine, and diethanolamine. In a further embodiment, the chain extender is 1,4-butanediol.

### Self-healing conditions

Self-healing of polymers may require intervention from external factors. However, self-healing of polymers should preferably occur without the intervention of external factors. Accordingly, in one embodiment, the self-healing occurs at ambient temperature. In another embodiment, the self-healing occurs at a temperature in the range 15 to 50°C, such as 25 to 40° C. In a further embodiment, the self-healing occurs without applying an external pressure. In yet a further embodiment, the self-healing occurs without a sequestered healing agent. In still a further embodiment, the self-healing occurs in less than 30 seconds, such as in less than 20 seconds, e.g. in less than 10 seconds.

In yet another embodiment, the self-healing occurs at ambient temperature and without applying an external pressure. In still another embodiment, the self-healing occurs at ambient temperature and without a sequestered healing agent. In still a further embodiment, the self-healing occurs without applying an external pressure and without a sequestered healing agent. In a further embodiment, the self-healing occurs at ambient temperature, without applying an external pressure, and without a sequestered healing agent.

It has been found that the polyurethanes as described herein display self-healing properties while submerged in an aqueous medium. Accordingly, in one embodiment, the self-healing occurs when the polyurethane is comprised in a partly or completely submerged structure.

### Submerged structures

Polyurethanes are used in many different applications involving submerging the polyurethane in an aqueous medium. Such applications include prosthetic materials for biomedical application, catheters, coatings in marine applications, and coatings for internal pipelines.

In a third aspect, the present invention concerns a partly or completely submerged structure comprising a polyurethane obtainable by reacting a mixture comprising a polycarbonate diol, a polyester diol, an isocyanate, and optionally a chain extender, wherein the polyurethane is located in the submerged part of the submerged structure. In one embodiment, said partly or completely submerged structure is a catheter.

### Examples

### Example 1.

A polyurethane elastomer was obtained by reacting polyisocyanate (commercial Suprasec® 2445, Huntsman), copolymer of polycarbonate of 1,6-hexanediol and polycaprolactone (Mw=1000Da) (commercial Eternacoll® UH50-100, UBE Chemical Europe, Castellón, Spain), and 1,4-butanediol (Sigma Aldrich, Barcelona, Spain) as chain extender. An NCO/OH ratio of 1.1 was used.

The mechanical properties of the polyurethane were measured by a stress-strain test in an Instron 4411 Universal testing machine by applying it to different polyurethane samples die-cut in type 2 dump-bell shape according to the ISO 37 standard. The pulling rate was 50 mm/min.

The self-healing of the polyurethane elastomer was tested by cutting the dumbbell-shaped test sample through the middle and re-joining the two freshly cut pieces immediately after cutting, in the location of the cut, and leaving it to stand at 40°C for 24 hours. Afterwards, the stress-strain test was repeated and the mechanical properties were compared.

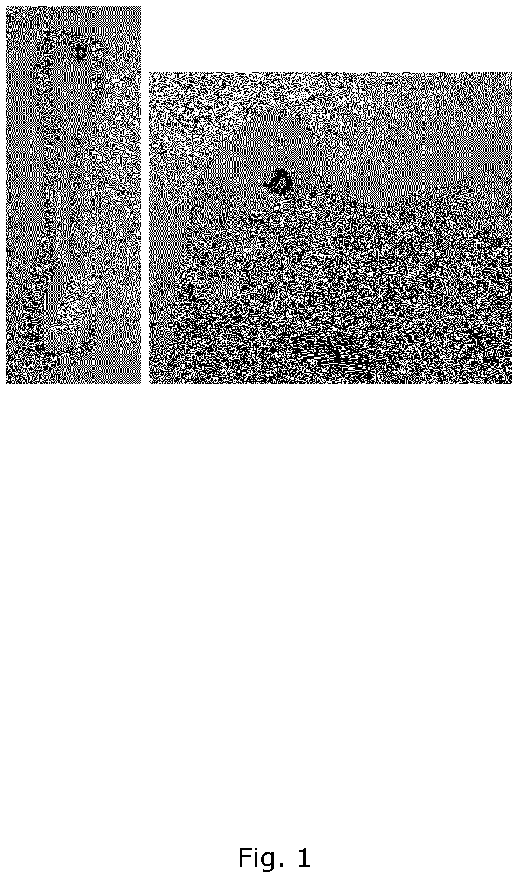

Figure 1 shows the polyurethane with the cut in the middle after re-joining, before and after the stress-strain test. After the stress-strain test, the polyurethane elongates and becomes shredded, but it is not broken and the part re-joined remains as an integral part of the material. This is a confirmation of the self-healing of the polyurethane material.

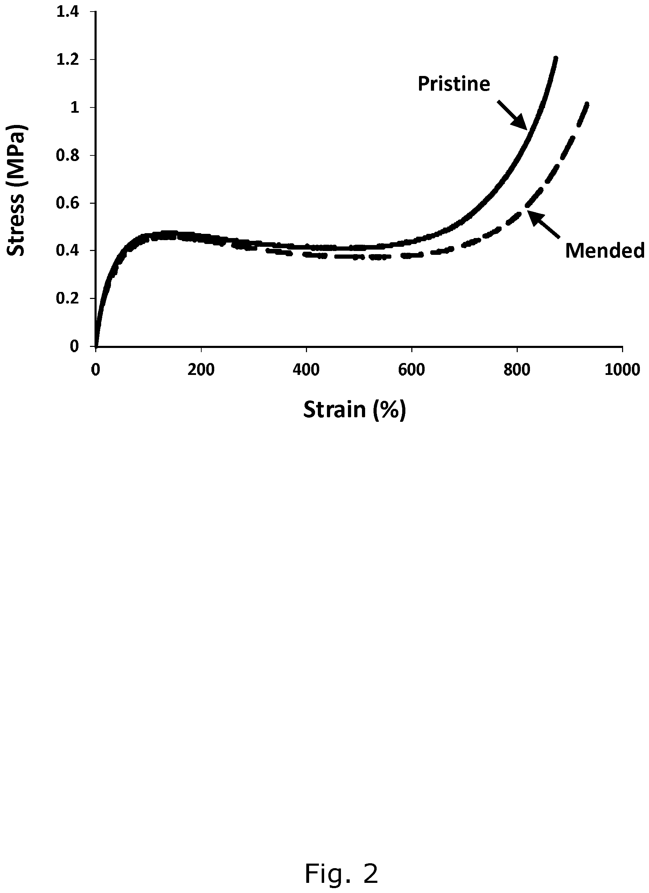

Figure 2 compares the stress-strain curves of the polyurethane material before and after the cut was produced. The elastic limit, tensile strength and elongation-at-break of the polyurethane before and after the cut are compared in Table 1.
Very similar curves are obtained, although the plastic deformation zone is somewhat less marked in the polyurethane after the cut was produced. Elastic moduli, tensile strength and elongation-at-break values are similar in the polyurethane before and after the cut, confirming self-healing.

**Table 1 - Mechanical properties obtained from the stress-strain curves of the polyurethane prepared according to this example**

| **Property** | **Before cut** | **After cut** |
|---|---|---|
| Elastic limit (MPa) | 0.5 | 0.5 |
| Tensile strength (MPa) | 1.2 | 1.0 |
| Elongation-at-break (%) | 873 | 932 |

### Example 2

A polyurethane elastomer was obtained by reacting polyisocyanate (commercial Suprasec® 2445, Huntsman), mixture of polyadipate of 1,4 butane diol (Mw=1000Da) (commercial polyester HOOPOL F523, Synthesia International, Barcelona, Spain) and polycarbonate of 1,6-hexanediol (Mw=1000Da) (commercial Eternacoll® UH100, UBE Chemical Europe, Castellón, Spain) (molar ratio is 50:50), and 1,4-butanediol (Sigma Aldrich, Barcelona, Spain) as chain extender. An NCO/OH ratio of 1.1 was used.

The mechanical properties of the polyurethane were measured by a stress-strain test in an Instron 4411 Universal testing machine by applying it to different polyurethane samples die-cut in type 2 dump-bell shape according to the ISO 37 standard. The pulling rate was 50 mm/min.

The self-healing of the polyurethane elastomer was tested by cutting the dumbbell-shaped test sample through the middle and re-joining the two freshly cut pieces immediately after cutting, in the location of the cut, and leaving it to stand at 40°C for 24 hours. Afterwards, the stress-strain test was repeated and the mechanical properties were compared.

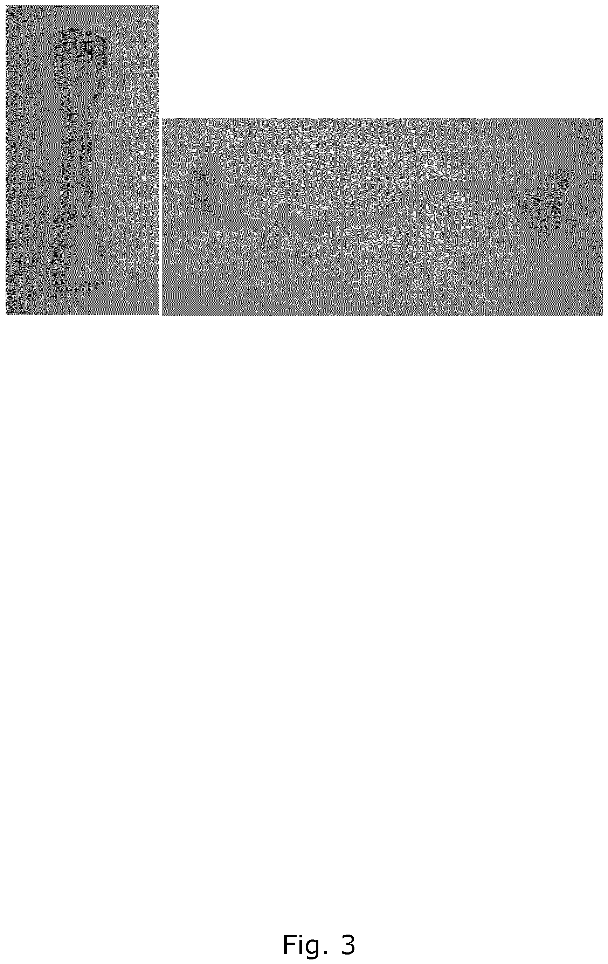

Figure 3 shows the polyurethane with the cut in the middle after re-joining, before and after the stress-strain test. After the stress-strain test, the polyurethane elongates and becomes shredded, but it is not broken and the part re-joined remains as an integral part of the material. This is a confirmation of the self-healing of the polyurethane material.

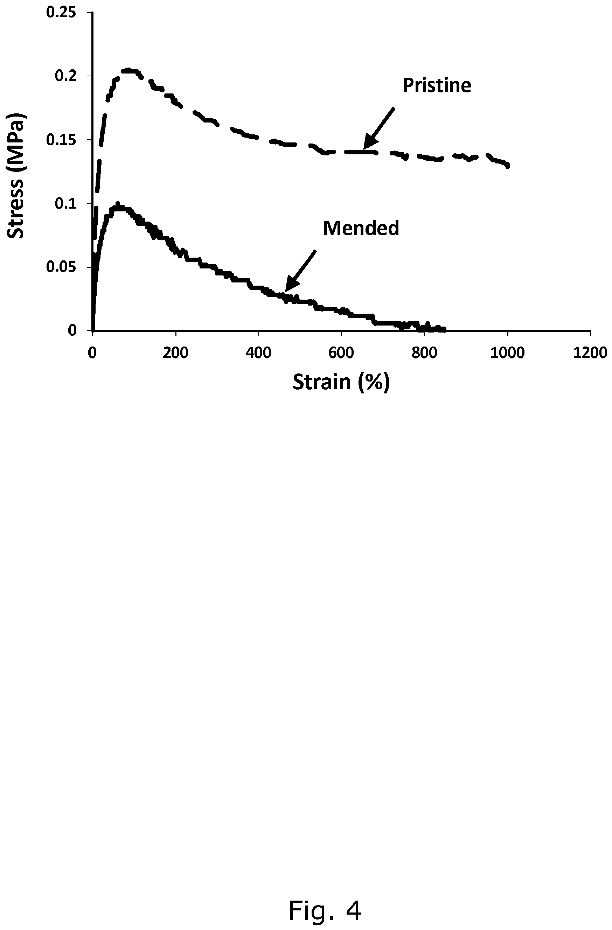

Figure 4 compares the stress-strain curves of the polyurethane material before and after the cut was produced. The elastic limit, tensile strength and elongation- at-break of the polyurethane before and after the cut are compared in Table 2. Very similar curves are obtained, although the mechanical properties in the polyurethane are slightly improved after the cut. Elastic moduli, tensile strength and elongation-at-break values are similar in the polyurethane before and after the cut, confirming self-healing.

**Table 2 - Mechanical properties obtained from the stress-strain curves of the uncut and cut polyurethane prepared according to this Example.**

| **Property** | **Before cut** | **After cut** |
|---|---|---|
| Elastic limit (MPa) | 0.1 | 0.2 |
| Tensile strength (MPa) | 0.1 | 0.2 |
| Elongation-at-break (%) | 850 | 1000 |

### Example 3

A polyurethane elastomer was prepared with a copolymer of polycarbonate of 1,6-hexanediol and polycaprolactone with 2000 Da molecular weight as the polyol (Eternacoll® UHC50-200), polyisocyanate (Suprasec® 2445), and 1,4-butanediol as a chain extender. Dibutyltin dilaurate was used as a catalyst. The polyurethane was prepared by mixing the components (one pot) and cured at room temperature for 24 hours. A dump-bell specimen of this material was immersed in water at 25 °C and cut through the middle by means of a lab-knife; the two pieces were re-joined inside the water.

The re-joined material was maintained soaked in water at 25°C for 24 hours and afterwards its mechanical properties were tested. The mechanical properties of the polyurethane were measured by a stress-strain test in an Instron 4411 Universal testing machine by applying it to different polyurethane samples die-cut in type 2 dump-bell shape according to the ISO 37 standard. The pulling rate was 50 mm/min.

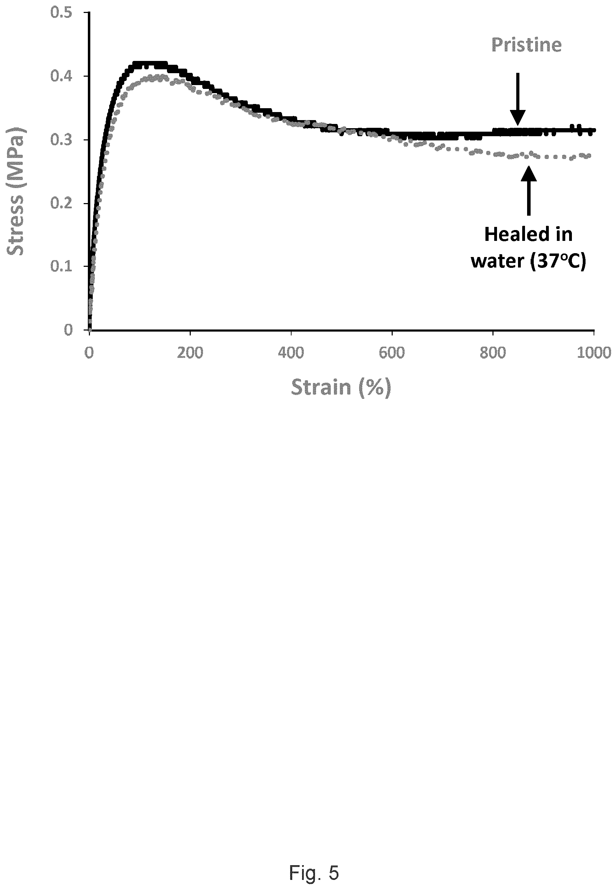

The stress-strain curve (Figure 5) shows the same mechanical behaviour of the polyurethanes after healing both in open air and immersed in water; both samples yield the elastic limit of the virgin material, reaching the same value of tensile strength at the yield point. Table 3 shows the values of the tensile strength and the percentage of healing efficiency, which is almost 100%.

**Table 3 - Mechanical properties obtained from the stress-strain curves of polyurethane elastomer prepared according to this Example before and after cut and re-joining in water.**

| | |
|---|---|
| **Tensile strength (virgin)=** | 0.476 MPa |
| **Tensile strength (healed in water)=** | 0.469 MPa |
| **Healing efficiency (24 hours, 25°C)=** | 98.5 % |

### Comparative Example 4

A polyurethane elastomer was obtained by reacting polyisocyanate (commercial Suprasec® 2445, Huntsman), polycaprolactone diol (Mw=2000Da) (Sigma Aldrich, Barcelona, Spain), and 1,4-butanediol (Sigma Aldrich, Barcelona, Spain) as a chain extender. An NCO/OH ratio of 1.1 was used.

The mechanical properties of the polyurethane were measured by a stress-strain test in an Instron 4411 Universal testing machine by applying it to different polyurethane samples die-cut in type 2 dump-bell shape according to the ISO 37 standard. The pulling rate was 50 mm/min.

The self-healing of the polyurethane elastomer was tested by cutting the dumbbell-shaped test sample through the middle and re-joining the two freshly cut pieces immediately after cutting, in the location of the cut, and leaving it to stand at 40°C for 24 hours. Afterwards, the stress-strain test was repeated and the mechanical properties were compared.

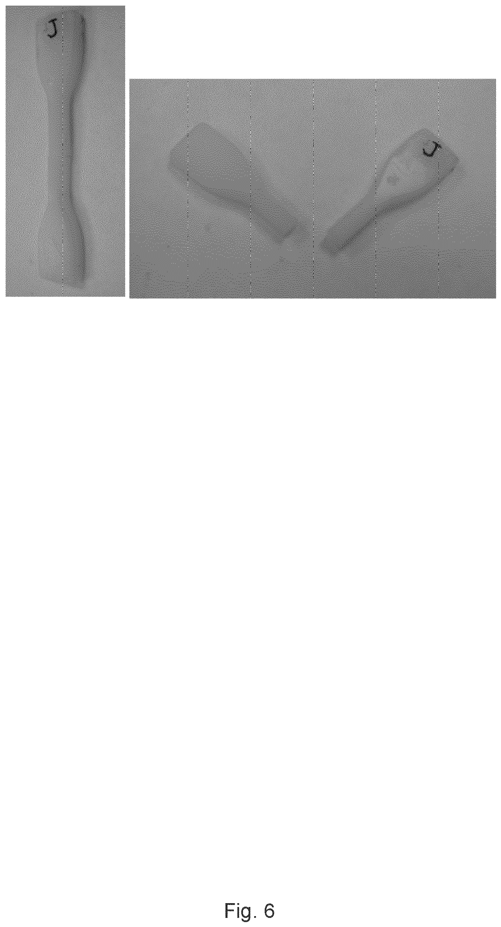

Figure 6 shows the polyurethane with the cut in the middle after re-joining, before and after the stress-strain test. After the stress-strain test, the polyurethane did not elongate and broke at the same location where the cut was produced. When polycaprolactone is used as the polyol, there is no self-healing of the polyurethane material.

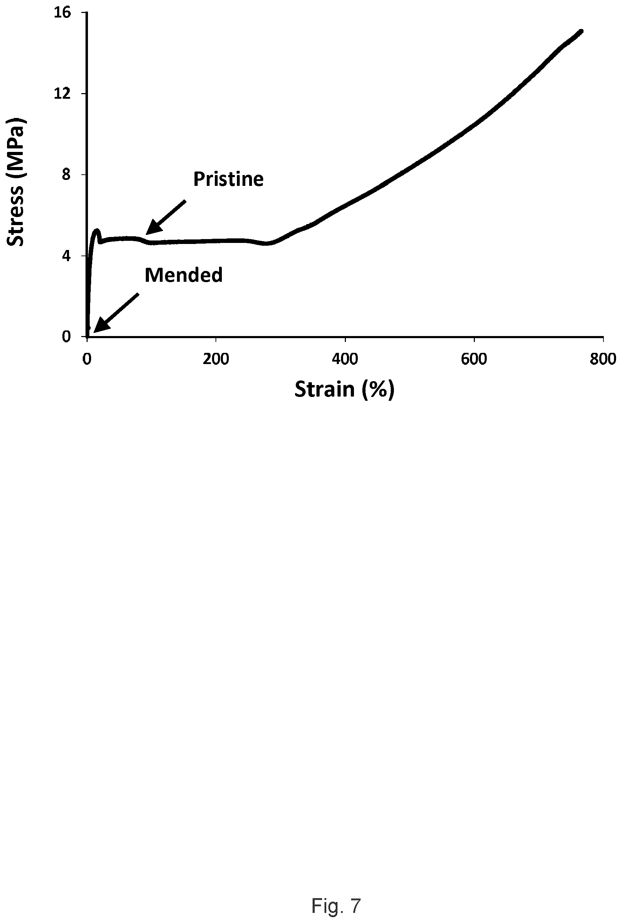

Figure 7 compares the stress-strain curves of the polyurethane material before and after the cut was produced. The elastic limit, tensile strength and elongation-at-break of the polyurethane before and after the cut are compared in Table 4. After the cut was produced, the polyurethane broke just after the start of the stress-strain test. Therefore, there is no self-healing of the polyurethane prepared with polycaprolactone as the polyol.

**Table 4 - Mechanical properties obtained from the stress-strain curves of the uncut and cut polyurethane prepared according to this Comparative Example.**

| **Property** | **Before cut** | **After cut** |
|---|---|---|
| Elastic limit (MPa) | 5.3 | 0.4 |
| Tensile strength (MPa) | 15.1 | 0.5 |
| Elongation-at-break (%) | 766 | 3 |

### Comparative Example 5

A polyurethane elastomer was obtained by reacting polyisocyanate (commercial Suprasec® 2445, Huntsman), polyadipate of 1,4-butanediol (Mw=1000Da) (commercial polyester HOOPOL F523, Synthesia International, Barcelona, Spain), and 1,4-butanediol (Sigma Aldrich, Barcelona, Spain) as a chain extender. An NCO/OH ratio of 1.1 was used.

The mechanical properties of the polyurethane were measured by a stress-strain test in an Instron 4411 Universal testing machine by applying it to different polyurethane samples die-cut in type 2 dump-bell shape according to the ISO 37 standard. The pulling rate was 50 mm/min.

The self-healing of the polyurethane elastomer was tested by cutting the dumbbell-shaped test sample through the middle and re-joining the two freshly cut pieces immediately after cutting, in the location of the cut, and leaving it to stand at 40°C for 24 hours. Afterwards, the stress-strain test was repeated and the mechanical properties were compared.

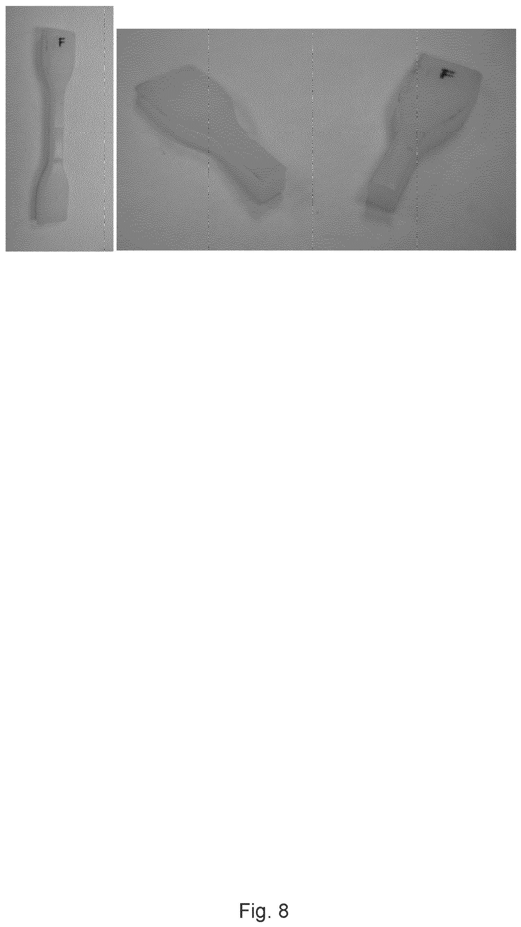

Figure 8 shows the polyurethane with the cut in the middle after re-joining, before and after the stress-strain test. After the stress-strain test, the polyurethane did not elongate and broke at the same location where the cut was produced. When polyester is used as the polyol, there is no self-healing of the polyurethane material.

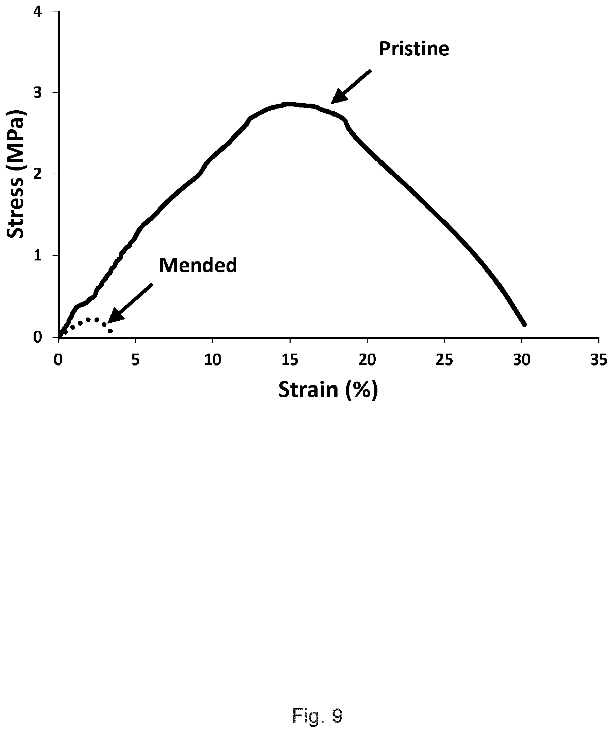

Figure 9 compares the stress-strain curves of the polyurethane material before and after the cut was produced. The elastic limit, tensile strength and elongation-at-break of the polyurethane before and after the cut are compared in Table 5. After the cut was produced, the polyurethane broke just after the start of the stress-strain test. Therefore, there is no self-healing of the polyurethane prepared with polyester as the polyol.

**Table 5 - Mechanical properties obtained from the stress-strain curves of the uncut and cut polyurethane prepared according to this Comparative Example.**

| **Property** | **Before cut** | **After cut** |
|---|---|---|
| Elastic limit (MPa) | 2.9 | 0.2 |
| Tensile strength (MPa) | 2.9 | 0.2 |
| Elongation-at-break (%) | 30 | 3 |

Table 6 compares the mechanical properties of the polyurethane materials as a percentage of variation. Self-healing is produced when values of 100% are obtained. The values in Table 6 show self- healing in all polyurethane prepared with a mixture containing polycarbonate diol. Because of the high polarity of the carbonate group as compared to ester or lactone groups, the interactions between the urethane and the carbonate by hydrogen bonding will be favoured and they could be responsible of the self-healing behaviour.

**Table 6 - Summary of self-healing efficiencies of the Examples.**

| Example | Self-healing efficiency (%) | | |
|---|---|---|---|
| | Elastic limit | Tensile strength | Elongation-at-break |
| *1* | 96 | 84 | 107 |
| *2* | 202 | 125 | 118 |
| *3* | | 99 | |
| *Comp. 4* | 8 | 3 | 0 |
| *Comp. 5* | 8 | 8 | 9 |

## Claims

1. Use of a polyurethane, obtainable by reacting a mixture comprising an isocyanate, and:
(a) a polycarbonate diol and a polyester diol, or
(b) a co-polymer of a polycarbonate diol and a polyester diol;
as a self-healing polymer, wherein the polycarbonate diol is a diol containing carbonate groups and straight or branched acyclic or cyclic alkylene groups having from 2 to 20 carbon atoms and wherein the self-healing polymer is defined as a polymer material whose tensile strength after being cut in half at the middle resulting in two halves, the two halves being arranged within five minutes of the cut to be in physical contact without a sequestered healing agent for 24 hours at a temperature of 25°C, is at least 45% of the tensile strength of an identical polymer material not having been cut in half, provided that the polymer material is cut and measured according to ISO 37 standard by using type 2 dumbbell specimens.

2. The use according to claim 1, wherein the mixture further comprises a chain extender.

3. The use according to claim 1, wherein the polycarbonate diol and the polyester diol are present in a molar ratio of 99.5:0.5 to 0.5:99.5.

4. The use according to any one of the preceding claims, wherein the use as a self-healing polymer occurs at a temperature in a range from 15 to 50°C.

5. The use according to any one of the preceding claims, wherein the self-healing occurs when the polyurethane is comprised in a partly or completely submerged structure.

6. The use according to claim 5, wherein the use as a self-healing polymer occurs at a temperature in the range from 25 to 40°C.

7. The use according to any one of the preceding claims, wherein the self-healing occurs without applying an external pressure.

8. A method of healing a cut or tear of a self-healing polymer being a polyurethane obtainable by reacting a mixture comprising an isocyanate and
(a) a polycarbonate diol and a polyester diol; or
(b) a co-polymer of a polycarbonate diol and a polyester diol;
wherein the polycarbonate is a diol containing carbonate groups and straight or branched acyclic or cyclic alkylene groups having from 2 to 20 carbon atoms,
and wherein the self-healing polymer is defined as a polymer material whose tensile strength after being cut in half at the middle resulting in two halves, the two halves being arranged within five minutes of the cut to be in physical contact without a sequestered healing agent for 24 hours at a temperature of 25°C, is at least 45% of the tensile strength of an identical polymer material not having been cut in half, provided that the polymer material is cut and measured according to ISO 37 standard by using type 2 dumbbell specimens;
the method being **characterized in that** it comprises arranging cut or torn parts of a polyurethane to be in physical contact with each other without a sequestered healing agent

9. The method according to claim 8, wherein the mixture further comprises a chain extender.

10. The method according to claim 8 or 9, wherein the cut or torn parts of the polyurethane are arranged to be in physical contact with each other at a temperature in a range from 15 to 50°C.

11. The method according to any one of claims 8 to 10, wherein the cut or torn parts of the polyurethane are arranged to be in physical contact with each other without applying an external pressure to the cut or torn parts of the polyurethane.

12. The method according to any one of claims 8 to 11, wherein the polycarbonate diol and the polyester diol are present in a molar ratio of 99.5:0.5 to 0.5:99.5.

## Patentansprüche

1. Verwendung eines Polyurethans, das erhältlich ist durch Umsetzen einer Mischung umfassend ein Isocyanat und
(a) ein Polycarbonatdiol und ein Polyesterdiol, oder
(b) ein Copolymer von einem Polycarbonatdiol und einem Polyesterdiol;
als ein selbstheilendes Polymer, wobei das Polycarbonatdiol ein Diol ist, das Carbonatgruppen und geradkettige oder verzweigte acyclische oder cyclische Alkylengruppen mit 2 bis 20 Kohlenstoffatomen enthält, und wobei das selbstheilende Polymer als ein Polymermaterial definiert ist, dessen Zugfestigkeit, nachdem es in der Mitte durch Zerschneiden halbiert wurde, so dass sich zwei Hälften ergeben, wobei die zwei Hälften innerhalb von fünf Minuten nach dem Zerschneiden derart angeordnet werden, dass sie ohne ein maskiertes Heilmittel 24 Stunden lang bei einer Temperatur von 25 °C in physischem Kontakt sind, wenigstens 45 % der Zugfestigkeit eines identischen Polymermaterials beträgt, das nicht durch Zerschneiden halbiert worden ist, vorausgesetzt, dass das Polymermaterial gemäß ISO 37 Norm unter Verwendung von Typ 2-Hantelprüfkörpern geschnitten und gemessen wird.

2. Verwendung gemäß Anspruch 1, wobei die Mischung außerdem einen Kettenverlängerer umfasst.

3. Verwendung gemäß Anspruch 1, wobei das Polycarbonatdiol und das Polyesterdiol in einem Molverhältnis von 99,5:0,5 bis 0,5:99,5 vorhanden sind.

4. Verwendung gemäß einem der vorangehenden Ansprüche, wobei die Verwendung als ein selbstheilendes Polymer bei einer Temperatur in einem Bereich von 15 bis 50 °C erfolgt.

5. Verwendung gemäß einem der vorangehenden Ansprüche, wobei die Selbstheilung erfolgt, wenn das Polyurethan in einer teilweise oder vollständig untergetauchten Struktur enthalten ist.

6. Verwendung gemäß Anspruch 5, wobei die Verwendung als ein selbstheilendes Polymer bei einer Temperatur im Bereich von 25 bis 40 °C erfolgt.

7. Verwendung gemäß einem der vorangehenden Ansprüche, wobei die Selbstheilung ohne Anlegen eines äußeren Drucks erfolgt.

8. Verfahren zum Heilen eines Schnitts oder Risses eines selbstheilenden Polymers, welches ein Polyurethan ist, das erhältlich ist durch Umsetzen einer Mischung umfassend ein Isocyanat und
(a) ein Polycarbonatdiol und ein Polyesterdiol; oder
(b) ein Copolymer von einem Polycarbonatdiol und einem Polyesterdiol;
wobei das Polycarbonat ein Diol ist, das Carbonatgruppen und geradkettige oder verzweigte acyclische oder cyclische Alkylengruppen mit 2 bis 20 Kohlenstoffatomen enthält,
und wobei das selbstheilende Polymer als ein Polymermaterial definiert ist, dessen Zugfestigkeit, nachdem es in der Mitte durch Zerschneiden halbiert wurde, so dass sich zwei Hälften ergeben, wobei die zwei Hälften innerhalb von fünf Minuten nach dem Zerschneiden derart angeordnet werden, dass sie ohne ein maskiertes Heilmittel 24 Stunden lang bei einer Temperatur von 25 °C in physischem Kontakt sind, wenigstens 45 % der Zugfestigkeit eines identischen Polymermaterials beträgt, das nicht durch Zerschneiden halbiert worden ist, vorausgesetzt, dass das Polymermaterial gemäß ISO 37 Norm unter Verwendung von Typ 2-Hantelprüfkörpern geschnitten und gemessen wird;
wobei das Verfahren **dadurch gekennzeichnet ist, dass** es das Anordnen von geschnittenen oder gerissenen Teilen eines Polyurethans derart umfasst, dass sie ohne ein maskiertes Heilmittel in physischem Kontakt miteinander sind.

9. Verfahren nach Anspruch 8, wobei die Mischung außerdem einen Kettenverlängerer umfasst.

10. Verfahren nach Anspruch 8 oder 9, wobei die geschnittenen oder gerissenen Teile des Polyurethans derart angeordnet werden, dass sie bei einer Temperatur in einem Bereich von 15 bis 50 °C in physischem Kontakt miteinander sind.

11. Verfahren gemäß einem der Ansprüche 8 bis 10, wobei die geschnittenen oder gerissenen Teile des Polyurethans derart angeordnet werden, dass sie ohne Anlegen eines äußeren Drucks auf die geschnittenen oder gerissenen Teile des Polyurethans in physischem Kontakt miteinander sind.

12. Verfahren gemäß einem der Ansprüche 8 bis 11, wobei das Polycarbonatdiol und das Polyesterdiol in einem Molverhältnis von 99,5:0,5 bis 0,5:99,5 vorhanden sind.

## Revendications

1. Utilisation d'un polyuréthane, apte à être obtenu en faisant réagir un mélange comprenant un isocyanate, et
(a) un polycarbonate diol et un polyester diol, ou
(b) un copolymère d'un polycarbonate diol et d'un polyester diol ;
en tant que polymère autoréparable, dans laquelle le polycarbonate diol est un diol contenant des groupes carbonate et des groupes alkylène linéaires ou ramifiés acycliques ou cycliques ayant de 2 à 20 atomes de carbone et dans laquelle le polymère autoréparable est défini comme un matériau polymère dont la résistance à la traction, après qu'il ait été coupé en deux en son milieu pour former deux moitiés, les deux moitiés étant disposées dans les cinq minutes de la coupe de façon à être en contact physique sans un agent de réparation séquestré pendant 24 heures à une température de 25°C, est d'au moins 45% de la résistance à la traction d'un matériau polymère identique n'ayant pas été coupé en deux, à condition que le matériau polymère soit coupé et mesuré selon la norme ISO 37 en utilisant des éprouvettes en épaulement de type 2.

2. L'utilisation selon la revendication 1, dans laquelle le mélange comprend en outre un agent d'allongement de chaîne.

3. L'utilisation selon la revendication 1, dans laquelle le polycarbonate diol et le polyester diol sont présents selon un rapport molaire de 99,5:0,5 à 0,5:99,5.

4. L'utilisation selon l'une quelconque des revendications précédentes, dans laquelle l'utilisation en tant que polymère autoréparable a lieu à une température comprise entre 15 et 50°C.

5. L'utilisation selon l'une quelconque des revendications précédentes, dans laquelle l'autoréparation se produit lorsque le polyuréthane est compris dans une structure partiellement ou complètement immergée.

6. L'utilisation selon la revendication 5, dans laquelle l'utilisation en tant que polymère autoréparable est faite à une température comprise entre 25 et 40°C.

7. L'utilisation selon l'une quelconque des revendications précédentes, dans laquelle l'autoréparation est faite sans appliquer de pression externe.

8. Un procédé de réparation d'une coupe ou d'une déchirure d'un polymère autoréparable consistant en un polyuréthanne apte à être obtenu en faisant réagir un mélange comprenant un isocyanate et
(a) un polycarbonate diol et un polyester diol ; ou
(b) un copolymère d'un polycarbonate diol et d'un polyester diol ;
dans lequel le polycarbonate est un diol contenant des groupes carbonate et des groupes alkylène acycliques ou cycliques, linéaires ou ramifiés, ayant de 2 à 20 atomes de carbone,
et dans lequel le polymère autoréparable est défini comme un matériau polymère dont la résistance à la traction, après qu'il ait été coupé en deux au milieu de façon à former en deux moitiés, les deux moitiés étant disposées dans les cinq minutes de la coupe de façon à être en contact physique sans un agent de réparation séquestré pendant 24 heures à une température de 25°C, est d'au moins 45% de la résistance à la traction d'un matériau polymère identique n'ayant pas été coupé en deux, à condition que le matériau polymère soit coupé et mesuré selon la norme ISO 37 en utilisant des éprouvettes en épaulement de type 2 ;
le procédé étant **caractérisé en ce qu'**il comprend le fait d'agencer de parties coupées ou déchirées d'un polyuréthanne de façon à ce qu'elles soient en contact physique l'une avec l'autre sans agent de réparation séquestré.

9. Le procédé selon la revendication 8, dans lequel le mélange comprend en outre un agent d'allongement de chaîne.

10. Le procédé selon la revendication 8 ou la revendication 9, dans lequel les parties coupées ou déchirées du polyuréthanne sont agencées de façon à être en contact physique l'une avec l'autre à une température comprise entre 15 et 50°C.

11. Le procédé selon l'une quelconque des revendications 8 à 10, dans lequel les parties coupées ou déchirées du polyuréthane sont agencées de façon à être en contact physique l'une avec l'autre sans appliquer de pression externe aux parties coupées ou déchirées du polyuréthane.

12. Le procédé selon l'une quelconque des revendications 8 à 11, dans lequel le polycarbonate diol et le polyester diol sont présents dans un rapport molaire de 99,5:0,5 à 0,5:99,5.
